# FASCICULE DE BREVET EUROPEEN

(11) **EP 0 376 762 B1**
(45) Date de publication et mention de la délivrance du brevet: **01.09.1993**
(21) Numéro de dépôt: 89402817.4
(22) Date de dépôt: 12.10.1989
(51) Int. Cl.: G01T 1/29

(54) **Procédé et dispositif pour déterminer la distribution spatiale des électrons émergeant de la surface d'un corps radio-actif**
Verfahren und Vorrichtung zur Bestimmung der räumlichen Verteilung der aus der Oberfläche eines radioaktiven Körpers austretenden Elektronen
Method and apparatus for determining the spatial distribution of electrons emitted by a radioactive surface

(30) Priorité: 13.10.1988 FR 8813485
(43) Date de publication de la demande: 04.07.1990
(73) Titulaire: Charpak, Georges, 75020 Paris (FR)
(72) Inventeur: Charpak, Georges, 75020 Paris (FR)
(74) Mandataire: Fréchède, Michel

(56) Documents cités:
- EP-A- 0 282 665
- NUCLEAR INSTRUMENTS AND METHODS IN PHYSICS RESEARCH, vol. A269, juin 1988, pages 142-148, Elsevier Science Publishers B.V., Amsterdam, NL; G. CHARPAK et al.: "Studies of light emission by continuously sensitive avalanche chambers"

## Description

La présente invention concerne la détermination de la distribution spatiale des électrons émergeant de la surface d'un corps radio-actif.

Elle s'applique plus particulièrement à des techniques utilisées en biologie.

Il est classique de déterminer la localisation de molécules dans un certain corps ou milieu, en marquant celles-ci par des substances radio-actives et en déterminant la position des électrons émergeant du corps ou milieu radio-actif renfermant ces molécules.

La technique la plus courante pour déterminer cette distribution est l'autoradiographie, qui consiste à placer un échantillon, tel qu'une coupe mince, contenant les molécules marquées contre un film photographique, qui est impressionné par les électrons (ou rayons β) émis par les éléments radio-actifs de ces molécules.

L'autoradiographie présente un triple inconvénient:
- elle demande un temps extrêmement long (souvent plusieurs mois) pour avoir des taches observables sur le film photographique, par exemple dans le cas des coupes de tissus biologiques;
- il faut disposer d'un appareil coûteux pour mesurer les densités photographiques des taches si l'on veut avoir une information quantitative sur les distributions relatives d'intensité du rayonnement et donc de la concentration des substances radio-actives;
- la précision sur l'intensité du rayonnement est limitée par la gamme dynamique, relativement réduite, des films photographiques, d'une part, et le bruit de fond, relativement élevé, d'autre part, de ceux-ci, en particulier dans le cas d'une pose très longue, qui est nécessaire, comme indiqué précédemment.

Par contre, l'autoradiographie permet d'obtenir une précision spatiale très grande, de l'ordre de quelques microns, qui n'est pas obtenable par d'autres procédés d'imagerie connus, car la limitation de la précision spatiale résulte uniquement de la dimension physique de la distribution de la tache radio-active.

On a proposé d'accélérer la détermination de la localisation de molécules, marquées par des éléments radio-actifs dans un corps, par la mise en oeuvre de détecteurs gazeux, qui, en réponse à un électron émis par les molécules marques, produisent une ionisation d'où résulte une impulsion électrique qui peut être localisée, après une multiplication appropriée dans le gaz. On a proposé en particulier comme détecteurs gazeux des chambres à fils. De telles chambres ont été décrites par le document demande de brevet européen EP-A-0 282 665 publiée le 21/09/88.

L'inconvénient des détecteurs gazeux, et en particulier des chambres à fils, est le parcours souvent considérable des électrons, émis par les molécules marquées, dans le gaz du détecteur, ce qui limite la précision de la localisation des molécules marquées. En effet le parcours, à la pression atmosphérique, peut être de plusieurs centaines de micromètres (µm) lorsque les molécules sont marquées avec du tritium, qui émet des électrons ou rayons β peu énergiques (à 6 keV en moyenne environ), et des dizaines de centimètres avec le phosphore 32, qui émet des électrons très énergiques (à 600 keV en moyenne environ).

Pour pallier l'inconvénient précité des détecteurs gazeux, un article de Petersen, Charpak, Melchart et Sauli dans Nuclear Instruments and Methods 176 (1980) 239-244, propose un détecteur gazeux dans lequel l'amplification des électrons d'ionisation libérés dans le gaz du détecteur se produits préférentiellement pour les électrons libérés près de la surface du détecteur contre laquelle est placé le corps à examiner comportant les molécules marquées, ce qui permet une précision accrue, de l'ordre de quelques centaines de microns, même pour les électrons émis par le phosphore 32, ainsi que cela ressort d'un article de Messieurs Bateman, Stephenson et Connolly dans Nuclear Instruments and Methods in Physics Research A 269 (1988) 415-424.

On notera que les détecteurs gazeux des différents types mentionnés ci-dessus comportent des électrodes, constituées en particulier par des fils, et que la localisation des avalanches de multiplication qui sont provoquées dans le gaz détecteur par les électrons provenant du corps radio-actif repose sur la détection des impulsions électriques engendrées dans ces électrodes par le mouvement des électrons et des ions produits par les avalanches.

Contrairement à la technique d'autoradiographie, d'une part, et des détecteurs à gaz avec détection des impulsions électriques produites dans des électrodes, d'autre part, la présente invention réalise la détection des avalanches produites dans un milieux gazeux, en réponse aux électrons émis par le corps radio-actif à examiner, par des moyens optiques qui détectent les photons, ultraviolets ou visibles, émis par les avalanches.

D'un autre côté on connaît, d'après l'article de Messieurs Charpak, Dominik, Fabre, Gaudaen, Sauli et Suzuki, dans Nuclear Instruments and Methods in Physics Research A 269 (1988) 142, un détecteur qui met en oeuvre la détection optique des avalanches produites par les électrons qui se multiplient dans un champ électrique intense, ces électrons étant produits par des réactions d'ionisation, les avalanches étant produites entre des grilles parallèles entre lesquelles est appliquée une haute tension continue et la détection optique des avalanches étant réalisée par mise en oeuvre d'un système qui comporte successivement un convertisseur d'image, un intensificateur d'image et une caméra du type CCD (dispositif à couplage de charge) optiquement couplée à l'intensificateur d'image par des fibres optiques.

Toutefois ce dernier article ne prévoit nullement l'application du détecteur gazeux qu'il décrit à la détection optique des électrons émis par des corps radio-actifs, et ne fournit aucun enseignement qui permettrait une telle application.

L'invention a justement pour objet de réaliser, par des moyens analogues à ceux prévus dans ce dernier article, la détection des avalanches produites par les électrons ou rayons β émis par un corps radio-actif, afin de pouvoir déterminer ensuite, par des moyens calculateurs appropriés, la localisation des sources d'électrons ou rayons β constitués par des molécules marquées de celui-ci, avec application notamment à l'imagerie médicale.

De ce fait l'invention a pour objet :
- d'une part, un procédé pour déterminer la distribution spatiale des électrons émergeant de la surface d'un corps radio-actif, caractérisé en ce qu'on dispose ladite surface contre la face d'entrée d'un détecteur gazeux, comportant au moins une chambre et contenant, entre électrodes, un gaz noble et un gaz ou vapeur qui émet des photons en réponse à l'impact d'électrons, et qu'on détermine la position des impacts, dans le détecteur, des électrons provenant de ladite surface, par l'observation des photons créés par une avalanche électronique, due à une multiplication entre ces électrodes, par un ensemble repérant les photons et calculant le centre de gravité de la distribution de ces photons;
- d'autre part, un dispositif pour déterminer la distribution spatiale des électrons émergeant de la surface d'un corps radio-actif, par la mise en oeuvre du procédé susvisé, caractérisé en ce qu'il comprend en combinaison : un détecteur gazeux, comportant au moins une chambre et contenant un gaz noble et un gaz ou vapeur qui émet des photons entre deux électrodes parallèles entre lesquelles est appliquée une haute tension continue, une première électrode étant destinée à recevoir, contre sa face externe, la surface du corps radio-actif à observer; un amplificateur de brillance disposé pour recevoir les photons émis par les atomes excités qui sont produits à proximité d'une deuxième électrode par l'avalanche électronique due au champ électrique entre les première et deuxième électrodes; une caméra disposée derrière l'amplificateur de brillance; et des moyens calculateurs aptes à calculer, à partir du signal de sortie de la caméra , les points d'entrée dans ledit détecteur gazeux, au niveau de la première électrode, des électrons émergeant de ladite surface du corps radio-actif.

Avantageusement : la surface du corps radio-actif disposé contre la face d'entrée du détecteur gazeux est revetue d'une couche électriquement conductrice transparente aux rayons β ou électrons émis par le corps radio-actif; la caméra est du type CCD/ les électrodes sont constituées par des grilles; le gaz noble est le xénon ou l'argon; et le gaz ou vapeur émetteur de photons est constitué par la triéthylamine, le tétrakis(diméthylamineéthylène, l'azote ou la vapeur d'eau.

On peut prévoir soit une seule chambre renfermant le gaz noble et le gaz ou vapeur émetteur de photons, soit deux chambres disposées l'une derrière l'autre, la première réalisant une amplification électronique préliminaire et la seconde transformant les électrons, en provenance de la première chambre, en une avalanche plus intense, les deux chambres étant remplies du même gaz ou vapeur émettant les photons et du gaz noble.

Les moyens calculateurs sont généralement programmés pour calculer le centre de gravité ou le maximum de la distribution des photons produite par une avalanche (en fait le sommet d'une courbe représentant la distribution des avalanches, car les électrons d'ionisation libérés dans le gaz par les rayons β ou électrons sont multipliés préférentiellement lorsqu'ils ont une grande distance à parcourir, ce qui privilégie les électrons libérés à l'entrée de la chambre, ou, en variante, effectuent le calcul d'un autre algorithme mathématique mieux approprié à la distribution spatiale des avalanches dans des cas particuliers.

En tout cas la précision obtenue sur le point d'entrée dans le détecteur gazeux, au niveau de la première électrode, de chaque électron émis par le corps radio-actif est très supérieure à l'extension physique des avalanches qui peuvent atteindre, pour chaque électron d'ionisation initial, une valeur de l'ordre du millimètre, la précision étant au moins dix fois plus grande, c'est-à-dire supérieure à un dixième de millimètre.

L'invention pourra, de toute façon, être bien comprise à l'aide du complément de description qui suit, ainsi que des dessins ci-annexés, lesquels complément et dessins sont, bien entendu, donnés surtout à titre d'indication.

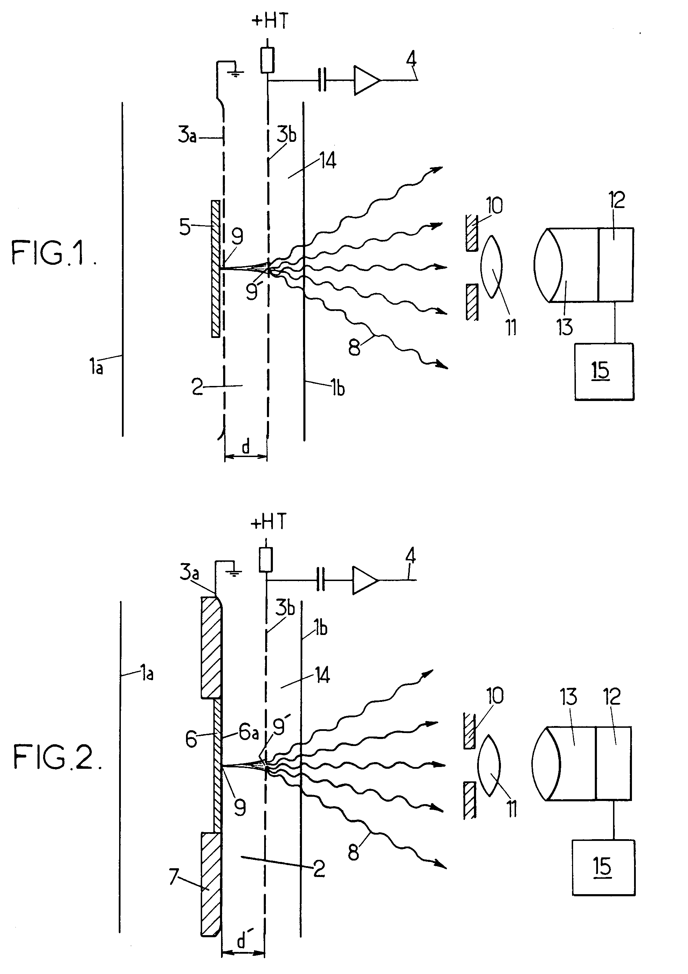

Les figures 1 et 2 illustrent, schématiquement et en coupe, deux modes de réalisation d'un dispositif mettant en oeuvre les perfectionnements selon l'invention.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un procédé et un dispositif pour déterminer la distribution spatiale des électrons émergeant de la surface d'un corps radio-actif, on s'y prend comme suit ou d'une manière analogue.

Le dispositif comporte, entre deux fenêtres 1a,1b, la deuxième, 1b, au moins étant en "Aclar" (polychlorotrifluoroéthylène) ou en tout autre matériau transparent aux photons émis, une chambre 2 de détecteur gazeux délimitée par deux électrodes 3a,3b constituées par des grilles, formées, dans l'exemple, par des fils de 50 micromètres (µm) de diamètre distants de 500 micromètres (µm) ; ces électrodes sont séparées par un intervalle d de l'ordre par exemple de 4 mm dans le cas de la figure 1 ou d' de l'ordre de 6 mm dans le cas de la figure 2.

Une haute tension +HT est appliquée à la grille 3b, tandis que la grille 3a est connectée à la masse, de manière à assurer une différence de potentiel haute tension HT, de l'ordre de 3500 V (environ 10 000 V/cm), par exemple, entre les deux électrodes, le signal de charge étant disponible en 4.

Le corps radio-actif à observer, référencé 5 sur la figure 1, est disposé dans celle-ci directement contre la première électrode-grille 3a.

Par contre, dans le mode de réalisation de la figure 2, le corps radio-actif 6 à examiner est couvert d'une couche mince 6a conductrice de l'électricité, mais transparente aux électrons émis par le corps. Par exemple on a appliqué une pellicule d'or 6a, épaisse de 100 Angströms (100 x 10⁻¹⁰m), sur une coupe 6 de rein de rat au moyen d'un appareil du type classique utilisé en microscopie électronique pour réaliser une pulvérisation cathodique d'or. Les électrons (à 6 keV en moyenne) émis par le tritium qui marquent les molécules de la coupe de rein traversent facilement une telle couche. A une fine pellicule d'or on peut substituer une pellicule transparente (aux électrons) d'un autre métal ou d'oxyde d'étain. Le corps radio-actif 6 est maintenu dans une plaque perforée 7 en un métal conducteur, par exemple en cuivre.

On notera que dans le cas d'utilisation du phosphore 32 pour marquer les molécules, les électrons émis par celui-ci sont suffisamment pénétrants (600 keV en moyenne) pour pouvoir utiliser une feuille de matière plastique, par exemple une feuille de mylar épaisse de 6 micromètres (µm)), pour séparer le corps radio-actif 5 ou 6 de l'électrode-grille 3a.

L'observation des photons 8 résultant de l'impact en 9', à proximité de la deuxième électrode-grille 3b, de la majorité des électrons de l'avalanche produite par les électrons d'ionisation engendrés par les électrons émis par le corps radio-actif 5 ou 6 se fait, à travers un diaphragme 10 et une lentille 11 de focalisation, par une caméra 12 de type CCD, précédée d'un amplificateur de lumière 13.

Quant au volume gazeux 14 du détecteur gazeux disposé entre les électrodes-grilles 3a et 3b de la chambre unique 2 du mode de réalisation des figures 1 et 2, il est constitué par un mélange gazeux d'un gaz noble et d'un gaz ou vapeur qui émet des photons. En particulier on a mis en oeuvre un mélange de 96,5% de xénon et de 3,5% de triéthylamine, le xénon et le triéthylamine réalisant une amplification électronique et la triéthylamine l'émission de photons.

En fait une avalanche exponentielle d'électrons est produite par le champ électrique entre les électrodes 3a et 3b (entre lesquelles est appliquée la haute tension HT) et on détecte l'image de la fin de cette avalanche.

La lumière est émise principalement contre la deuxième électrode 3b. Elle est produite par les atomes excités dans l'avalanche provoquée par l'électron le plus proche de la première électrode 3a. En raison du caractère exponentiel de la multiplication, c'est cet électron là qui produit l'avalanche la plus grande et permet de surmonter l'écueil du grand parcours des rayons β ou électrons.

On a utilisé les dispositifs des figures 1 et 2 pour étudier une coupe, épaisse de 20 microns, d'un rein de rat marqué avec du tritium et on a pu obtenir en trente heures (alors qu'environ trois mois sont nécessaires dans le cas d'une autoradiographie) des détails anatomiques de la taille de 30 à 40 micromètres (µm).

On a également étudié un corps radio-actif constitué par un gel porteur de lignes de phosphore 32; la précision est uniquement limitée par la dimension physique des lignes radio-actives elles-mêmes et elle est meilleure que le quart du millimètre, bien que l'épaisseur d ou d' de l'espace gazeux amplificateur entre les deux électrodes-grilles 3a et 3b soit de 4 mm ou 6 mm respectivement.

Dans une variante on peut prévoir, à la place d'une chambre unique, entre électrodes 3a et 3b, renfermant à la fois le gaz noble et le gaz émetteur de photons, deux chambres d'amplification successives, toutes deux renfermant le gaz noble et le gaz émetteur de photons, l'information purement électrique de la première chambre (disponible en 4) pouvant être utilisée pour déclencher l'ouverture ou la fermeture de l'amplificateur de brillance 13.

La sortie de la caméra 12 est appliquée à un microprocesseur 15 ou autre calculateur, qui est programmé pour effectuer le calcul du centre de gravité de la distribution des photons produite par une avalanche dans la chambre 2.

Du fait que l'on utilise un système de détection optique avec calcul au moyen d'un microprocesseur ou autre calculateur, il est possible de prévoir la mise en mémoire des différents résultats et on peut alors obtenir une analyse par portions de surface de l'image du corps radio-actif 5 ou 6, par traitement approprié, dans le microprocesseur ou autre calculateur, de l'information sous forme numérique, mise en mémoire, en utilisant l'information électrique obtenue avec l'électrode 3b pour aiguiller les informations optiques en des mémoires séparées correspondant à différentes portions de l'image.

Dans une variante, on peut remplacer l'ensemble opto-électronique illustré sur les figure 1 et 2, observant les photons 8 et déterminant la distribution lumineuse, par une batterie de photodiodes à semi-conducteurs, soit placées contre ou près de l'électrode-grille 3b, les signaux des photodiodes permettant de déterminer le centre de gravité ou le maximum de l'impulsion lumineuse, soit couplées à l'électrode-grille 3b par des fibres optiques scintillantes transmettant la lumière émise par le gaz émetteur de photons (par exemple la lumière émise par la triéthylamine est centrée sur 280 nm).

Quand on introduit un échantillon à l'intérieur de l'espace d'amplification, il est utile de pouvoir maintenir des conditions de champ électrique uniforme au-dessus de l'échantillon sans que des étincelles éclatent en particulier sur le bord du porte-échantillon. Ce porte-échantillon peut, par exemple, être une lame de verre de microscope sur laquelle sont déposées des coupes minces (20 micromètres (µm) anatomiques, marquées au tritium, dont on veut mesurer la distribution. Il est recommandé dans ce cas de couvrir le porte-échantillon et l'échantillon d'une couche mince d'or (50 Angström (50 x 10⁻¹⁰m) par exemple) et de placer sur le pourtour de la plaque de verre un cadre conducteur mince (d'épaisseur 0,5 mm environ) et étroit (de largeur environ 3 mm), que l'on porte à un potentiel intermédiaire entre le potentiel de la cathode constituée par la surface du porte-échantillon et celui de l'anode contre laquelle se produisent les avalanches. En plaçant un tel cadre autour de chaque porte-échantillon, on arrive à confiner la multiplication aux régions situées au-dessus des échantillons anatomiques ou autres, radio-actifs, et à éviter les claquages intempestifs dus aux aspérités mécaniques qui existent en général sur le bord des plaques porte-échantillons.

Comme il va de soi, l'invention ne se limite nullement aux modes d'application et de réalisation qui ont été plus spécialement envisagés; elle en embrasse, au contraire, toutes les variantes.

## Revendications

1. Procédé pour déterminer la distribution spatiale des électrons émergeant de la surface d'un corps radio-actif au moyen d'un détecteur gazeux comportant au moins une chambre munie d'électrodes (3a, 3b) entre lesquelles est appliquée une haute tension continue (HT), uné avalanche électronique due à une multiplication électronique étant créée entre ces électrodes, ladite chambre contenant, entre ces electrodes, un gaz noble et un gaz ou vapeur qui émet des photons en réponse à l'impact d' électrons, procédé dans lequel
- on dispose ladite surface (5) contre la face d'entrée dudit détecteur au voisinage de la première électrode (3a), et
- on détermine la position des impacts, dans le détecteur, des électrons provenant de ladite surface (5, 6) par l'observation desdits photons créés par l'avalanche électronique, à partir de l'avalanche provoquée par l'électron le plus proche de la première électrode (3a), cet électron, en raison du caractère exponentiel de la multiplication, produisant l'avalanche la plus grande, par un ensemble (10, 11, 12, 13, 15) repérant les photons et calculant le centre de gravité ou le maximum de la distribution desdits photons.

2. Procédé selon la revendication 1, caractérisé en ce qu'il consiste en outre à revétir la surface du corps radio-actif disposé contre la face d'entrée du détecteur gazeux d'une couche électriquement conductrice transparente aux rayons β ou électrons émis par le corps radio-actif.

3. Dispositif pour déterminer la distribution spatiale des électrons émergeant de la surface d'un corps radio-actif, par la mise en oeuvre du procédé selon la revendication 1 ou 2, comprenant en combinaison : un détecteur gazeux, comportant au moins une chambre (2) et contenant un gaz noble et un gaz ou vapeur qui émet des photons entre deux électrodes parallèles (3a, 3b) entre lesquelles est appliquée une haute tension continue (HT), la première électrode (3a) étant destinée à recevoir, contre sa face externe, la surface du corps radio-actif (5, 6) à observer ; la deuxième électrode (3b) permettant de provoquer un phénomène d'avalanche en particulier pour l'électron le plus proche de la première électrode (3a), cet électron, en raison du caractère exponentiel de la multiplication, produisant l'avalanche la plus grande, des moyens d'observation des photons engendrés par ce phénomène d'avalanche, ces moyens comportant un amplificateur de brillance; et des moyens calculateurs (15) aptes à calculer, à partir du signal de sortie de la caméra , les points d'entrée (9) dans ledit détecteur gazeux, au niveau de la première électrode, des électrons émergeant de ladite surface du corps radio-actif.

4. Dispositif selon la revendication 3, caractérisé en ce que le détecteur gazeux comporte une seule chambre (2) remplie d'un mélange de gaz noble et de gaz ou vapeur émetteur de photons.

5. Dispositif selon la revendication 3, caractérisé en ce qu'il comporte deux chambres disposées l'une derrière l'autre, la première réalisant une amplification électronique préliminaire et la seconde transformant les électrons, en provenance de la première chambre, en une avalanche plus intense, les deux chambres étant remplies du même gaz ou vapeur émettant les photons et du gaz noble.

6. Dispositif selon l'une quelconque des revendications 3 à 5, caractérisé en ce que la caméra (12) est du type CCD.

7. Dispositif selon l'une quelconque des revendications 3 à 6, caractérisé en ce que les électrodes (3a,3b) sont constituées par des grilles.

8. Dispositif selon l'une quelconque des revendications 3 à 7, caractérisé en ce que le gaz noble est pris dans le groupe constitué par le xénon et l'argon.

9. Dispositif selon l'une quelconque des revendications 3 à 8,caractérisé en ce que le gaz ou vapeur émetteur de lumière est pris dans le groupe constitué par la triéthylamine, le tétrakis(diméthylamine)éthylène, l'azote et la vapeur d'eau.

10. Dispositif selon l'une quelconque des revendications 3 à 9, caractérisé en ce que les moyens calculateurs (15) sont programmés pour calculer le centre de gravité ou le maximum de la distribution des photons produite dans le détecteur par une avalanche sous l'effet de l'impact d'un électron en provenance du corps radio-actif, ou bien tout autre algorithme adapté à l'énergie du rayonnement β.

11. Dispositif selon l'une quelconque des revendications 3 à 9, caractérisé en ce que les moyens calculateurs (15) comportent une mémoire apte à stocker, sous forme d'informations numériques, la distribution des photons dans différentes portions de surface du corps radio-actif (5, 6), les moyens calculateurs permettant de restituer cette distribution par portion de surface du corps radio-actif en utilisant l'information contenue dans des signaux électriques provenant d'une des électrodes.

12. Dispositif selon la revendication 3, caractérisé en ce que la chambre constituant espace d'amplification entre électrodes cathode-anode comprend :
- un porte-échantillon, destiné à recevoir l'échantillon à analyser, l'ensemble constitué par le porte-échantillon et l'échantillon à analyser étant revétu d'une couche électriquement conductrice, l'ensemble constituant la cathode,
- un cadre conducteur (7), entourant le porte-échantillon, ce cadre étant porté à un potentiel intermédiaire entre celui de la cathode et de l'anode.

## Claims

1. A method for determining the spatial distribution of electrons emerging from the surface of a radioactive body, by means of a gas detector at least comprising a chamber with electrodes (3a, 3b) between which a high continuous potential (HT) is applied, an electron avalanche due to electrons multiplication being generated between said electrodes, said chamber containing between said electrodes a noble gas and a gas or vapor emitting photons in response to he impact of electrons, wherein said method consists
- in placing said surface (5) against the entrance face of said detector in the vicinity of said first electrode (3a), and
- determining the position of the impacts, in the detector, of the electrons originating from said surface (5, 6) by observing the photons, created by an electron avalanche from the avalanche generated by the electron closest to said first electrode (3a), said electron owing to the exponential character of the multiplication producing the largest avalanche, by means (10, 11, 12, 13, 15) detecting the photons and computing the center of gravity of the distribution of these photons.

2. A method according to claim 1, wherein the surface of the radioactive body placed against the entrance face of the gas detector is coated with an electrically conductive layer that is transparent to the β-rays or electrons emitted by the radioactive body.

3. A device, for determining the spatial distribution of the electrons emerging from the surface of a radioactive body, according to the method of claim 1 or 2, including in combination :
- a gas detector, including at least one chamber (2) with a pair of parallelly disposed electrodes (3a, 3b) and containing both a noble gas and a gas or vapor that emits photons between said electrodes, means for applying a continuous high voltage (HT) between said electrodes, the first electrode (3a) of said pair being adapted for receiving, against its external face, the surface of the radioactive body (5-6) to be observed, the second electrode (3b) allowing an electronic avalanche to be generated particularly for the electron closest to the first electrode (3a), said electron owing to the exponential character of the multiplication producing the largest avalanche, means for observing the photons generated by said avalanche, said means comprising
- a brilliance amplifier, and
- computing means (15) capable of computing, in response to the output signal of the camera, the entrance points (9) in said gas detector, at the first electrode, of the electrons emerging from said surface of the radioactive body.

4. A device according to claim 3, wherein said gas detector has one single chamber (2) filled with a mixture of noble gas and of a photon-emitting gas or vapor.

5. A device according to claim 3, wherein said gas detector has two chambers arranged one behind the other, the first one performing a preliminary electron amplification and the second one transforming the electrons originating from the first chamber into a more intense avalanche, the two chambers being filled with the same gas or vapor that emits photons and with a noble gas.

6. A device according to one of claims 3 to 5, wherein said camera (12) is of the CCD-type.

7. A device according to one of claims 3 to 6, wherein said electrodes (3a, 3b) are constituted by grids.

8. A device according to one of claims 3 to 7, wherein the noble gas is selected from the group constituted by xenon and argon.

9. A device according to one of claims 3 to 8, wherein the gas or vapor that emits the light is selected from the group constituted by triethylamine, tetrakis(dimethylamine)ethylene, nitrogen and water vapor.

10. A device according to one of claims 3 to 9, wherein said computing means (15) are programmed in order to compute the center of gravity or the maximum of the distribution of photons produced in the detector by an avalanche under the effect of the impact of an electron originating from a radioactive body, or any other algorithms adapted to β-rays energy.

11. A device according to one of claims 3 to 9, wherein said computing means (15) include a memory capable of storing, in the form of digital data, the distribution of the photons in various portions of the surface of the radioactive body (5, 6), the computing means making it possible to recover this distribution by portions of surface of the radioactive body by using the information contained in the electrical signals originating from one of said electrodes.

12. A device according to claim 5, wherein said chamber performing electron amplification between cathode-anode electrodes comprises :
- a sample-holder, adapted to receive the sample to be observed, the assembly formed together with the sample-holder and the sample being coated with an electrical conductive layer, said assembly forming the cathode,
- a conductive frame (7) surrounding the sample-holder, said frame being brought to an intermediate potential between cathode and anode potential.

## Patentansprüche

1. Verfahren zur Bestimmung der räumlichen Verteilung der aus der Oberfläche eines radioaktiven Körpers austretenden Elektronen mittels eines Gasdetektors, welcher aufweist mindestens eine Kammer mit Elektroden (3a, 3b), zwischen denen eine hohe Gleichspannung (HT) angelegt wird, eine Elektronenlawine, welche auf eine zwischen diesen Elektroden erzeugte Elektronenvervielfachung zurückzuführen ist, ein Edelgas und ein Gas oder Dampf, das (der) beim Auftreffen von Elektronen Photonen emittiert, in welchem Verfahren
die Oberfläche(5) bei der Einlaßseite in der Nähe der ersten Elektrode (3a) angeordnet ist;
in dem Detektor die Stelle der Einschläge der Elektronen, die von der Oberfläche (5, 6) stammen, durch Beobachtung der durch die Elektronenlawine erzeugten Photonen mittels einer Anordnung (10, 11, 12, 13, 15) festgestellt wird, welche die Photonen auffrischt und den Schwerpunkt oder das Maximum der Verteilung der Photonen berechnet, wobei die Lawine durch das der ersten Elektrode (3a) nächste Elektron ausgelöst worden ist, wobei dieses Elektron proportional zu dem exponentiellen Charakter der Vervielfachung die größte Lawine erzeugt.

2. Verfahren nach Anspruch 1, dadurch gekennzeichnet, daß darüber hinaus die Oberfläche des radioaktiven Körpers bei der Einlaßseite des Gasdetektors mit einer elektrisch leitenden Schicht versehen ist, die für β-Strahlen oder Elektronen durchlässig ist, die von dem radioaktiven Körper emittiert worden sind.

3. Vorrichtung zur Bestimmung der räumlichen Verteilung der aus der Oberfläche eines radioaktiven Körpers austretenden Elektronen zum Durchführen des Verfahrens nach Anspruch 1 oder 2, welche aufweist:
einen Gasdetektor, der mindestens eine Kammer (2) aufweist und ein Edelgas und ein Gas oder Dampf enthält, das (der) Photonen zwischen zwei parallelen Elektroden (3a, 3b) emittiert, zwischen welchen eine hohe Gleichspannung angelegt wird, wobei die erste Elektrode (3a) dazu bestimmt ist, an ihrer Außenseite die Oberfläche des radioaktiven Körpers (5, 6) zum Beobachten aufzunehmen, wobei die zweite Elektrode (3b) ein Lawinenphänomen insbesondere durch das der ersten Elektrode (3a) nächste Elektron auslösen kann, wobei dieses Elektron proportional zu dem exponentiellen Charakter der Vervielfachung die größte Lawine erzeugt, Einrichtungen zur Beobachtung der Photonen, die durch das Lawinenphänomen erzeugt worden sind, welche Einrichtungen aufweisen einen Helligkeitsverstärker und Rechnereinrichtungen (15), welche sich aufgrund des Ausgangssignals der Kamera zum Betrachten eignen, die Eintrittsstellen (9) in den Gasdetektor in der Ebene der ersten Elektrode, wobei die Elektronen aus der Oberfläche des radioaktiven Körpers austreten.

4. Vorrichtung nach Anspruch 3, dadurch gekennzeichnet, daß der Gasdetektor eine einzige Kammer (2) aufweist, die mit einem Gemisch aus Edelgas und Gas oder Dampf als Photonengeber gefüllt ist.

5. Vorrichtung nach Anspruch 3, dadurch gekennzeichnet, daß sie zwei hintereinander angeordnete Kammern aufweist, von welchen in der ersten Kammer eine elektronische Vorverstärkung erfolgt, und die zweite die aus der ersten Kammer kommenden Elektronen in eine sehr intensive Lawine umformt, wobei die beiden Kammern mit demselben Gas oder Dampf gefüllt sind, das (der) die Photonen emittiert, und mit Edelgas gefüllt sind.

6. Vorrichtung nach einem der Ansprüche 3 bis 5, dadurch gekennzeichnet, daß die Kamera (12) eine des CCD-Typs ist.

7. Vorrichtung nach einem der Ansprüche 3 bis 6, dadurch gekennzeichnet, daß die Elektroden (3a, 3b) durch Gitter gebildet sind.

8. Vorrichtung nach einem der Ansprüche 3 bis 7, dadurch gekennzeichnet, daß das Edelgas in die Gruppe fällt, die durch Xenon und Argon gebildet ist.

9. Vorrichtung nach einem der Ansprüche 3 bis 8, dadurch gekennzeichnet, daß das Gas oder der Dampf in die Gruppe fällt, die durch Triethylamin, Tetrakis(dimethylamin)ethylen, Stickstoff und Wasserdampf gebildet ist.

10. Vorrichtung nach einem der Ansprüche 3 bis 9, dadurch gekennzeichnet, daß die Rechner (15) programmiert sind, um den Schwerpunkt oder das Maximum der Verteilung der Photonen, die in dem Detektor durch eine Lawine unter der Einwirkung des Aufpralls eines Elektrons von dem radioaktiven Körper oder eines ganz anderen, an die Energie der β-Strahlung angepaßten Algorithmus erzeugt worden ist.

11. Vorrichtung nach einem der Ansprüche 3 bis 9, dadurch gekennzeichnet, daß die Rechner (15) einen Speicher aufweisen, um in Form von digitalen Informationen die Verteilung der Photonen in verschiedenen Oberflächenbereichen des radioaktiven Körpers (5, 6) zu speichern, wobei die Rechner diese Verteilung durch einen Oberflächenbereich des radioaktiven Körpers rekonstruieren durch Verwenden der Information, die in elektrischen Signalen enthalten ist, welche von einer der Elektroden stammen.

12. Vorrichtung nach Anspruch 3, dadurch gekennzeichnet, daß die Kammer, die einen Verstärkungsraum zwischen den Elektroden Anode-Kathode bildet, aufweist:
einen Probenträger zum Aufnehmen einer zu analysierenden Probe, wobei die Anordnung aus dem Probenträger und der zu analysierenden Probe mit einer elektrisch leitenden Schicht versehen ist und die Kathode bildet,
einen leitenden Rahmen (7), welcher den Probenträger umschließt, und auf einem Potential zwischen demjenigen der Kathode und der Anode gehalten ist.
